# NEUE EUROPÄISCHE PATENTSCHRIFT

(11) **EP 0 548 011 B2**
(45) Veröffentlichungstag und Bekanntmachung des Hinweises auf die Entscheidung über den Einspruch: **05.12.2001**
(45) Hinweis auf die Patenterteilung: 17.05.1995
(21) Anmeldenummer: 92810961.0
(22) Anmeldetag: 07.12.1992
(51) Int. Cl.: B23K 11/06

(54) **Schweissnahtabdeckung auf der Innenseite von Blechrohren**
Internal weld bead protection of sheet metal tubes
Protection d'un cordon de soudure sur la paroi intérieure de tubes de tôle

(30) Priorität: 17.12.1991 CH 373591
(43) Veröffentlichungstag der Anmeldung: 23.06.1993
(73) Patentinhaber: Frey, Ernst M., CH-3655 Sigriswil (CH)
(72) Erfinder: Frey, Ernst M., CH-3655 Sigriswil (CH)
(74) Vertreter: Patentanwälte Breiter + Wiedmer AG

(56) Entgegenhaltungen:
- EP-A- 0 136 131
- EP-A- 0 434 617
- US-A- 3 077 171
- US-A- 3 118 406
- US-A- 3 733 670
- US-A- 3 859 495
- US-A- 4 663 103
- US-A- 4 735 835
- PATENT ABSTRACTS OF JAPAN VOL. 8, No. 189 (M-321)(1626)30. AUGUST 1984 & JP-A-59 078 786 (TOYOTA JIDOSHA K.K.) 7. MAI 1984

## Beschreibung

Die Erfindung bezieht sich auf eine Vorrichtung nach dem Oberbegriff von Patentanspruch 1. Weiter bezieht sich die Erfindung auf ein Verfahren zum Betrieb der Vorrichtung und auf eine Anwendung des Verfahrens.

Es sind Schweissmaschinen bekannt, welche ein "in line" angebautes Auftragssystem haben, das einen Schutzstreifen auf die innere Längsschweissnaht von Blechrohren, insbesondere von längsgeschweissten Büchsen- und Dosenmänteln, aufbringt. Grundsätzlich wird dabei zwischen dem Aufsprühen eines Lacks und dem Aufbringen eines Pulvers unterschieden, das an Ort und Stelle zu einer haftenden Schicht verschmolzen wird.

Das Aufbringen eines Lacks erfolgt, je nach Maschinentyp, oben oder unten, wobei das zu behandelnde Blechrohr normalerweise an einem Auftragsarm hängend, beim Aufbringen im unteren Bereich dagegen auf einem Transportband stehend, in Längsrichtung des Auftragsarms transportiert wird.

Nach einer ersten bekannten Variante wird der Lack ohne Luft mit hohem Druck durch Rohre geringen Durchmessers zur Sprühdüse gebracht. Nach einer zweiten Variante wird der Lack mit einem Luftstrom zerstäubt.

Nach beiden bekannte Varianten wird die innere Schweissnaht mit einem Nasslack abgedeckt, die trockene Schicht ist etwa 10 µm dick, aber im Vergleich zu einem weissen Innenlack verhältnismässig porös. Weiter besteht ein Nachteil der Verwendung von bekannten Lackauftragsvorrichtungen darin, dass die Spitzen von Punkt- und Rasterschweissstellen nicht von Lack bedeckt werden, weil dieser abfliesst.

Mit anderen bekannten Auftragsvorrichtungen an Schweissmaschinen werden die inneren Längsschweissnähte von Blechrohren geschützt, indem ein Pulverstreifen in gleichmässiger Dicke aufgetragen und in situ geschmolzen wird. Die wieder erstarrten Schichten sind in der Regel über 50 µm dick und im wesentlichen porenfrei.

Es können alle dem Fachmann zu dieser Verwendung bekannten Lacke und Puder eingesetzt werden.

Insbesondere bei in der Lebensmittelindustrie verwendeten Weissblechdosen ist eine saubere, sterilisationsfeste Innenabdeckung der Schweissnaht von höchster Bedeutung. Die Lebensmittelechtheit bedingt weiter, dass die Schutzschicht auch harten mechanischen Bearbeitungen, wie dem Anbringen von Sicken oder dem Bördeln. standhält.

Versuche zum Aufbringen von sterilisationsfesten "Hotmelts", wie thermoplastische Kleber kurz genannt werden, welche auch der mechanischen Beanspruchung standhalten, sind bisher auch daran gescheitert, dass sie nicht mit den Verhältnissen angepassten technischen Mitteln aufgebracht werden konnten.

Die US.A.3733670 beschreibt eine Vorrichtung zur Herstellung einer Längsschweissnaht eines grossen Lebensmittelbehälters, indem die Kanten eines Blechs übereinandergelegt und mit Zinn verschweisst werden. Diese Schweissvorrichtung umfasst weiter eine Reinigungsbürste und eine Aufsprüheinrichtung für flüssigen Zinn mittels Flammspritzens. Die Behälter werden einzeln auf einer Rollenbahn vorwärtsbewegt. Das Aufbringen einer anderen Schicht als Zinn wird weder erwähnt noch angedeutet, insbesondere ist nicht von der Zufuhr und dem Auftragen einer Hotmelt-Masse die Rede.

Die US,A 3077171 betrifft eine Vorrichtung zum kontinuierlichen Auftragen einer Schutzschicht zum Abdecken der Innenseite einer Längsschweissnaht von Blechrohren an einer Schweissmaschine. Es wird ein harzartiges Material als plastische Schutzschicht aufgetragen. Die Materialzufuhr erfolgt wie bei allen bekannten Vorrichtungen in Vorschubrichtung der in stirnseitigem Abstand transportierten Rohrkörper, indem ein Band oder ein Förderrohr durch den,rohrförmig ausgebildeten Schweissarm geführt wird. Ein mit dem Schweissarm coaxialer, die Rohrkörper tragender Auftragsarm ist halbzylinderförmig ausgebildet und schirmt die Auftragseinrichtung für die Schutzschicht ab.

Der Erfinder hat sich deshalb die Aufgabe gestellt, eine Vorrichtung der eingangs genannten Art und ein Verfahren zu deren Betrieb zu schaffen, welche den Einsatz von Hotmelts auf einfache. wirtschaftliche und wirkungsvolle Art ermöglichen. Alle unerwünschten Diffusionsprozesse mit einem abgefüllten Gut, insbesondere Lebensmitteln, sollen verhindert werden.

In bezug auf die Vorrichtung wird die Aufgabe erfindungsgemäss von Patentanspruch 1 gelöst. Spezielle und weiterbildende Ausführungsformen der Vorrichtung sind Gegenstand von entsprechenden, abhängigen Ansprüchen.

Der rohrförmig ausgebildete Auftragsarm ist in an sich bekannter Weise einends stirnseitig mit dem Schweissarm der Schweissmaschine verbunden und andernends in Axialrichtung frei beweglich vorzugsweise abgestützt. Diese Art Auftragsarm wird im folgenden mit Auftragsrohr bezeichnet.

Die in das Auftragsrohr eingeführte Hotmelt-Masse ist blockförmig ausgebildet, wobei die Blökke höchstens etwa dem Innenquerschnitt des Auftragsrohrs entsprechen. Entsprechend dem in der Regel runden Innenquerschnitt sind die Hotmelt-Blöcke meist zylinderförmig ausgebildet. Es sind eine grosse Zahl von Hotmelts für den erfindungsgemässen Einsatz geeignet, besonders interessieren lebensmittelfeste Hotmelts, wie beispielsweise auf der Basis eines Polyesters oder eines Epoxyharzes.

Zweckmässig wird die Kraft zum Vorschieben und Anpressen der blockförmigen Hotmelt-Masse über einen plattenförmigen Einsatz erzeugt, welcher in seinen Aussendimensionen den Innendimensionen des Auftragsrohrs entspricht. Die Hotmelt-Blöcke, wegen ihrer Form auch Kerzen genannt, können so entsprechend dem Verbrauch durch Abschmelzen vorwärts geschoben werden, wobei wenn nötig bekannte rollende oder wälzende Hilfsmittel angewandt werden können. Blöcke können mit weit weniger Kraftaufwand geschoben werden als beispielsweise ein entsprechendes Granulat, welches überdies den Nachteil einer zu geringen Kompaktheit aufweist.

Die Krafteinwirkung des Einsatzes auf die Hotmelt-Blöcke erfolgt also immer mechanisch, während dieser Einsatz selbst mit elektromechanischen, pneumatischen oder hydraulischen Mitteln betätigt werden kann.

Ein Einsatz mit Aussengewinde, welches in ein entsprechendes Gewinde auf der Innenseite des Auftragsrohrs eingreift, muss zwangsläufig rund sein. Für den Vorschub mit einer Spindel, pneumatischen oder hydraulischen Mitteln dagegen, sind neben dem bevorzugten runden Innenquerschnitt des Auftragsrohrs auch weitere Querschnitte verwendbar, insbesondere ein rechteckiger oder quadratischer. In diesem Fall sind die Hotmelt-Blöcke entsprechend quaderförmig statt zylinderförmig ausgebildet.

Bei technisch einfachen Lösungen erfolgt das Chargieren der Hotmelt-Blöcke diskontinuierlich, das Beschiçhtungsverfahren muss alle 1 - 2 Stunden unterbrochen werden, wenn der im Auftragsrohr gelagerte Vorrat an blockförmiger Hotmelt-Masse vom Einsatz durchgestossen ist. Während eines kurzen Betriebsunterbruchs von z.B. ein bis zwei Minuten wird
- das Antriebsorgan mit dem Einsatz zurückgefahren und aus dem Auftragsrohr entfernt, ein langer oder mehrere kürzere Hotmelt-Blöcke eingesetzt und der Einsatz und das Eintriebsorgan wieder positioniert, oder
- ein innen und aussen flächenbündiger, sich über etwa den oberen Bereich des Umfangs erstreckender Deckel wird abgehoben, Hotmelt-Blöcke werden eingelegt und in Richtung des Schweissarms verschoben, und der Deckel wird wieder verschlossen. Selbstverständlich muss vorher der Einsatz zurückgefahren, die Dosentransporteinrichtung weggeklappt und die den Deckel blockierenden Blechrohre abgestreift werden.

In bezug auf das Verfahren zum Betrieb der Vorrichtung wird die Aufgabe erfindungsgemäss dadurch gelöst, dass die blockförmige Hotmelt-Masse, der Vorschubrichtung der Blechrohre entgegenlaufend, durch das Auftragsrohr geführt, im Bereich der sich verengenden Heizung geschmolzen, durch das Zuflussrohr in die Applikationsdüse geführt und als Streifen auf die Innenseite der Längsschweissnaht aufgetragen oder aufgespritzt wird. Spezielle und weiterbildende Ausführungsformen sind Gegenstand von abhängigen Patentansprüchen.

Mit dem erfindungswesentlichen Merkmal, die blockförmige Hotmelt-Masse in bezug auf Vorschubrichtung der Blechrohre von vorne zuzuführen, ist dem Auftragen eines Hotmelt-Schutzstreifens auf eine Längsschweissnaht in einem Blechrohr zum Durchbruch verholfen worden. Dieses Verfahren lässt auch kompliziertere technische Lösungen offen, welche einen kontinuierlichen oder quasi-kontinuierlichen Betrieb bezüglich der Einführung von Hotmelt-Blöcken in das Auftragsrohr zulassen.

Der Auftrag des inneren Schutzstreifens kann in gleicher Weise oben, unten oder in einer seitlichen Position erfolgen, dies ist abhängig von der Lage der Applikationsdüse, der Anordnung der Dosen-Transportvorrichtung und bei "in line" arbeitenden Schweissmaschinen von der Ausrichtung der inneren Schweissrolle auf die Applikationsdüse. In der Praxis erfolgt der Auftrag des Hotmelt-Streifens meist oben, die Blechrohre hängen so am einen kleineren Durchmesser aufweisenden Schweissarm, am Auftragsrohr, oder an wenigstens einem obenliegenden Transportband und werden in Axialrichtung weitergeschoben.

Die erfindungsgemäss eingesetzten Hotmelts haben vorzugsweise einen Schmelzpunkt im Bereich von 100-300°C, die lebensmittelechten insbesondere von 200 bis 280°C. Die Heizmanschetten werden, von Sensoren kontrolliert, programmgesteuert auf eine entsprechende Temperatur gebracht.

Die Breite der aufgetragenen oder aufgespritzten Hotmelt-Streifen richtet sich nach der Schweissnaht, sie liegt in der Praxis im Bereich von 3 bis 12 mm. Der aufgetragene Hotmelt-Streifen wird sofort hart, bei bevorzugten Schichtdicken von 20 bis 150 µm, insbesondere 20 bis 50 µm, können beim Schweissen erzeugte Spitzen nicht durchdrücken, wie dies beim Lack-Beschichtungsverfahren der Fall ist.

Die bis zu einem Nachfüllen von Hotmelt-Blökken notwendigen Zeitintervalle von 1 - 2 h können verlängert werden, indem
- das meist etwa 1,1 - 2,0 m lange Auftragsrohr verlängert, und/oder
- eine dünnere Schicht aufgetragen wird.

Eine im Zuflussrohr auf die geschmolzene Hotmelt-Masse einwirkende Pumpe unterstützt und vergrössert den durch das Antriebsorgan mit dem Einsatz erzeugten Druck. Dies kann insbesondere bei einem zähflüssigeren Hotmelt, beim Aufspritzen und/oder bei der Ausbildung von überlangen Auftragsrohren der Fall sein. Mit der Pumpe werden Drücke von beispielsweise 5 bis 50 Pa, insbesondere 10 bis 35 Pa, erreicht.

Die erfindungsgemässe Vorrichtung und das Verfahren zu deren Betrieb haben den industriell bisher für Hotmelt-Massen nicht realisierbaren Vorteil, dass die Applikationsdüse benachbart der Schweissrolle angebracht werden kann. Deshalb kann einerseits die von der Schweissrolle auf die Blechrohre übertragene Wärme genutzt werden, und andrerseits sind die Schweissnähte der Bechrohre noch genau gerichtet.

Eine besonders vorteilhafte Anwendung des erfindungsgemässen Verfahrens liegt im Auftragen einer sterilisationsfesten Hotmelt-Masse auf die innere Längsschweissnaht eines Weissblechdosenmantels. Eine Schicht wird als sterilisationsfest bezeichnet, wenn sie z.B. bei einer Erwärmung während etwa 1 h auf etwa 130° C unverändert bleibt.

Die Erfindung erlaubt nicht nur eine Hotmelt-Beschichtung bei Neuanlagen, mit geringem Aufwand können bestehende Anlagen umgerüstet werden.

Die Erfindung wird anhand des in der Zeichnung dargestellten Ausführungsbeispiels näher erläutert, welches auch Gegenstand von abhängigen Ansprüchen ist. Es zeigen schematisch:
- Fig. 1 einen teilweisen Querschnitt durch ein Blechrohr im Bereich der Längsschweissnaht.
- Fig. 2 eine teilweise aufgeschnittene Ansicht einer Vorrichtung zum kontinuierlichen Auftragen eines Hotmelt-Schutzstreifens,
- Fig. 3 die Vorrichtung gemäss Fig. 2 im Bereich des Antriebsorgans für den Vorschub der blockförmigen Hotmelt-Masse,
- Fig. 4 die Vorrichtung gemäss Fig. 2 im Bereich der Applikationsdüse, und
- Fig. 5 eine Variante von Fig. 4.

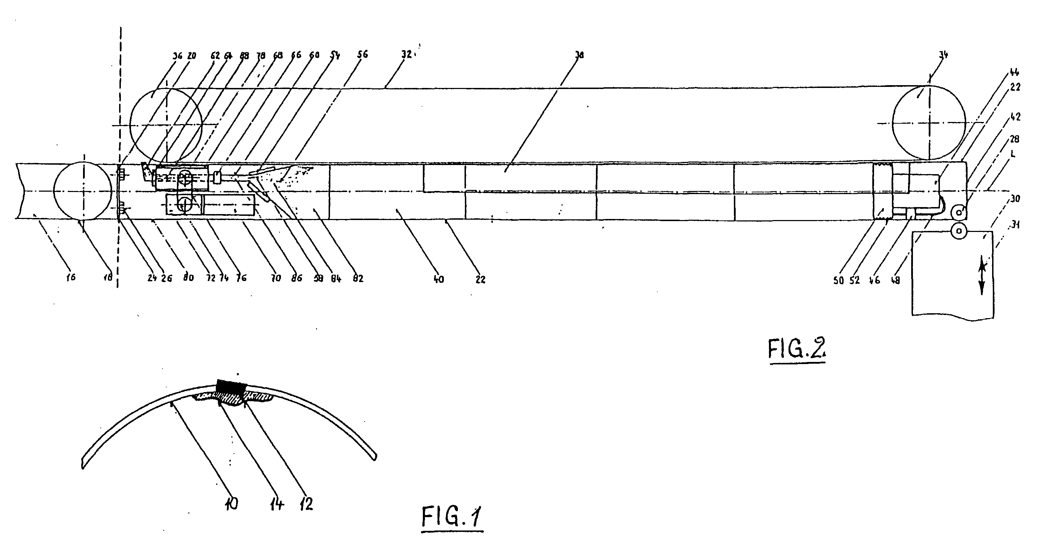

Das in Fig. 1 teilweise gezeigte Blechrohr 10 hat eine Längsschweissnaht 12, welche auf der Innenseite mit einem längslaufenden Hotmelt-Streifen 14 aus einem Polyester abgedeckt ist.

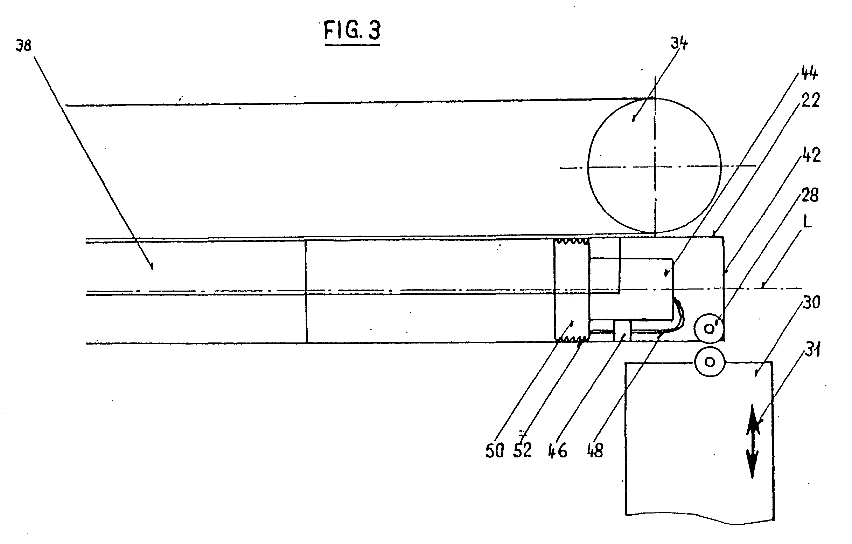

In der Vorrichtung zum kontinuierlichen Auftragen eines Hotmelt-Streifens zum Abdecken der Innenseite einer Längsschweissnaht gemäss den Fig. 2 - 5 sind die stirnseitig aneinander liegenden Blechrohre der Übersichtlichkeit wegen nicht eingezeichnet. Am Schweissarm 16 einer handelsüblichen, nicht gezeichneten Schweissmaschine ist im Bereich der Stirnseite 20 eine innere Schweissrolle 18 gelagert. Der Schweissarm 16 hat beispielsweise einen Durchmesser von 60 mm, die geringfügig überragende innere Schweissrolle 18 einen solchen von 62 mm. Dieser Schweissarm ist insbesondere zum Verschweissen von Blechrohren eines Durchmessers von etwa 65 bis 200 mm geeignet. Der Durchmesser der Blechrohre kann also nur geringfügig, aber auch sehr viel grösser sein als derjenige des Schweissarms 16. Für kleinere oder grössere Blechrohre ist ein entsprechend adaptierter Schweissarm 16 einsetzbar.

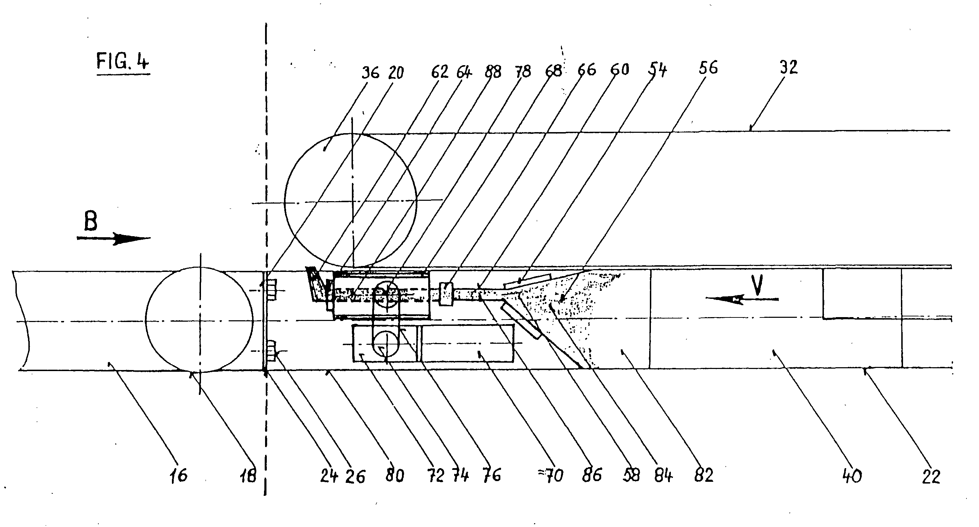

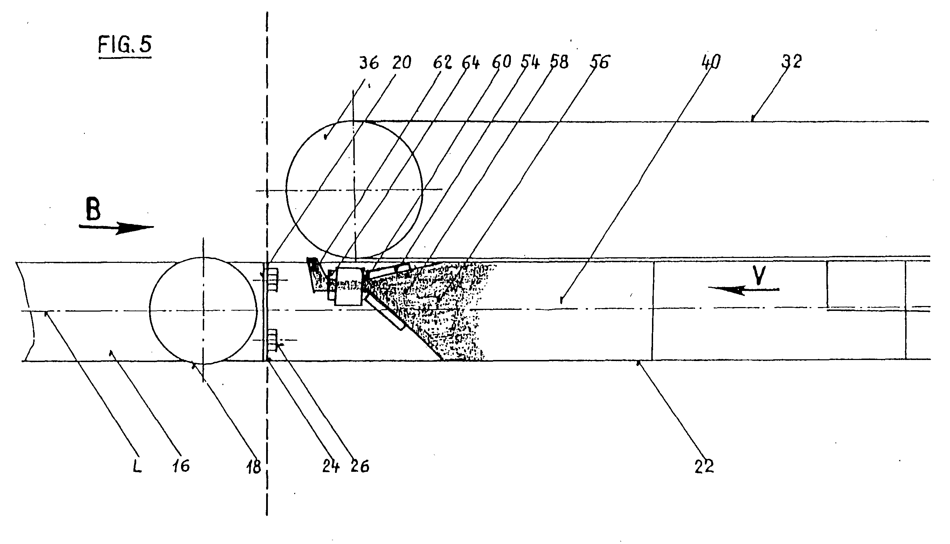

Mit dem Schweissarm 16 coaxial und flächenbündig verbunden ist ein Auftragsarm aus einem Stahlrohr, welcher deshalb im folgenden mit Auftragsrohr 22 bezeichnet wird. Das Auftragsrohr 22 mit der gleichen Längsachse L ist mit Befestigungsmitteln 24 am Schweissarm 16 angebracht. Die Befestigungsmittel 24 sind beispielsweise Schrauben, Nieten, ein innerer Flansch oder eine Verschweissung. Die in Fig. 4 und 5 gezeigten Befestigungsmittel 24 haben eine Bohrung 26 für Kabeldurchführungen. Andernends ist das Auftragsrohr 22 über Kugellager-Laufrollen 28 auf einem Ständer 30 abgestützt. Der Ständer 30 mit den spreizbaren Kugellager-Laufrollen 28 ist je nach dem Durchmesser der Blechrohre bezüglich der Höhe einstellbar, was mit einem Doppelpfeil 31 angedeutet ist. Ständer 30 und Kugellager-Laufrollen 28 können dem jeweiligen Blechrohrdurchmesser angepasst werden.

Die von der inneren Schweissrolle 18 zusammengefügten, nicht dargestellten Blechrohre 10 laufen in-line auf das Auftragsrohr 22, wo sie von einem endlosen Transportband 32 weitergeschoben werden, welches von zwei Umlenkrollen 34, 36, eine davon die Antriebsrolle, geführt ist. Das Transportband 32 hat eine magnetische Halterung für die Blechrohre und einen variablen Antrieb. Die Transporteinrichtung 32, 34, 36 kann nach oben weggeklappt werden. In bezug auf die Vertikale symmetrisch können beidseits der Schweissnaht auch zwei Transporteinrichtungen 32,34,36 angeordnet sein.

Das Auftragsrohr 22 weist einen Deckel 38 auf, welcher aussen und innen flächenbündig ist und sich etwa über die obere Hälfte des Auftragsrohrs 22 erstreckt. Zur Entfernung des sich über einen Teil der Länge des Auftragsrohrs 22 erstreckenden Deckels 38 werden vorerst die abhebbaren Mittel mit dem Transportband 32 und den Umlenkrollen 34, 36 hochgeklappt, dann die Verschraubung des Deckels 38 gelöst. Weist die Innenfläche des Auftragsrohrs ein Innengewinde auf, so hat auch der Deckel 38 ein entsprechendes Gewinde.

Bei abgehobenem Deckel 38 kann blockförmige Hotmelt-Masse 40, im vorliegenden Fall vier etwa 20 cm lange Hotmelt-Rollen eines Durchmessers von etwa 50 mm, in das etwa 1,5 m lange Auftragsrohr eingefüllt werden.

Im Bereich der offenen Stirnseite 42 des Auftragsrohrs 22 ist ein Gleichstrommotor 44 gelagert. Eine Verdrehungshalterung 46, in einem nicht sichtbaren Längsschlitz des Auftragsrohrs 22 verschiebbar, ist zugleich Kabelführung für das Anschlusskabel 48 des Gleichstrommotors 44.

Mittels eines Übersetzungsgetriebes üblicher Bauart dreht der Gleichstrommotor 44 einen Einsatz 50 mit einem Aussengewinde 52. das im vorliegenden Fall im Schnitt trapezförmig ist. Die Innenseite des Auftragsrohrs 22 und des Deckels 38 weisen ein entsprechendes, nicht gezeigtes Gewinde auf.

Ein vom Gleichstrommotor 44 ausgeübtes Drehmoment bewirkt durch den drehenden Einsatz 50 eine Schubkraft in Vorwärtsrichtung V auf die eingelegten Hotmelt-Blöcke 40 und führt beim Abschmelzen zu einem Vorschub mit einstellbarer Anstellkraft.

Vor dem Einlegen neuer Hotmelt-Blöcke 40 kann der Gleichstrommotor 44 mit dem Einsatz 50 im Schnellgang zurückgeführt werden.

Eine sich in der Vorschubrichtung V der Hotmelt-Blöcke 40 verjüngende Heizung 54, beispielsweise in Form einer Manschette, Heizdrähten oder Heizbändern, lässt die Hotmelt-Blöcke 40 in einer Schmelzzone 56 pastös werden. Im Innenbereich 58 der Heizung 54 wird die Hotmelt-Masse vollständig verflüssigt und wird durch die vom Gleichstrommotor 44 mit dem Einsatz 50 ausgeübte Vorschub- und Anpresskraft durch ein Zuflussrohr 60 zu einer auswechselbaren Applikationsdüse 62 fliessen. Durch eine Öffung überragt die Applikationsdüse 62 den Aussenmantel des Auftragsrohrs 22 in gleichem Masse wie die innere Schweissrolle 18 den Aussenmantel des Schweissarms 16.

Die Applikationsdüse 62 ist auswechselbar an einem Düsenhalter 64 befestigt. Sie ist zum Auftragen oder zum Aufspritzen der Hotmelt-Masse 40 in an sich bekannter Weise ausgebildet. Beim Auftragen wird die Breite des die Längsschweissnaht 12 abdeckenden Hotmelt-Streifens 14 (Fig. 1) durch die Länge des Querschlitzes bestimmt. Die Austragsöffnung der Applikationsdüse 62 ist entsprechend dem Radius der in Längsrichtung L geführten Blechrohre ausgebildet und deshalb auswechselbar. Beim Aufspritzen der Hotmelt-Masse 40 ist neben der Ausbildung der Applikationsdüse 62 auch deren Abstand von der Längsschweissnaht mitbestimmend für die Breite des Hotmelt-Streifens. Bei einer Aufspritzdüse ragt diese nicht, wie in Fig. 2 und 4 gezeichnet, aus dem Autragsrohr 22 heraus.

Das Zuflussrohr 60 wird über eine auswechselbare Filterpatrone 66 durch eine zweite Heizung 68 geführt, an welcher der Düsenhalter 64 befestigt ist.

Im Bereich der zweiten Heizung 68 wirkt eine. nicht sichtbare Minipumpe bei einem Durchfluss von 10 bis 25 g/min mit einem Druck von 10 bis 35 Pa (1 Pa = 1000 Millipascal) auf die geschmolzene Masse im Zuflussrohr 60 ein. Eine solche Minipumpe ist nicht notwendig, wenn die Hotmelt-Masse genügend dünnflüssig ist und genügend Druck zum Ausstossen aus der Applikationsdüse 62 einwirkt. Die Minipumpe wird von einem Gleichstrommotor 70 mit einem Getriebe 72 betätigt; welches über ein Antriebsrad 74 und einen Zahnriemen 76 auf ein Pumpenrad 78 einwirkt.

Der Gleichstrommotor 70 der Minipumpe wird über eine Öffnung 80 im unteren Bereich des Auftragsrohrs 22 ventiliert und gekühlt. Diese Öffnung 80 dient auch dem Auswechseln der Applikationsdüse 62.

In der Schmelzzone 56, im Zwischenbereich der sich verengenden Heizung 54, im Zuflussrohr 60 und in der Düsenbefestigung 64 ist wenigstens je ein Messfühler 82, 84, 86, 88 angeordnet.

Im Unterschied zu Fig. 4 weist Fig. 5
- keine Filterpatrone 66 und
- im Zuflussrohr 60 keine Minipumpe auf.

Zur Verbesserung der Gleitfähigkeit der blockförmigen Hotmelt-Masse 40 kann das Auftragsrohr 22 innen mit Teflon beschichtet und/oder auf wenigstens einem Teil der Länge angewärmt werden.

## Patentansprüche

1. Schweissmaschine zum Herstellen von in Axialrichtung verschweissten Blechrohren (10) mit einer Vorrichtung zum kontinuierlichen Auftragen einer Schutzschicht (14) zum Abdecken der Innenseite der Längsschweissnaht (12) der in Axialrichtung (L) transportierten Blechrohre (10), welche Schweissmaschine
a) eine auf einem Schweissarm (16) angeordnete innere Schweissrolle (18),
b) einen coaxial und oberflächenbündig zum Schweissarm (18) verlaufenden, die Blechrohre (10) tragenden Auftragsarm (22), welcher rohrförmig ausgebildet ist,
c) Mittel (32, 34, 36) zum Transport der Blechrohre (10), und
d) eine Auftragseinrichtung für die Schutzschicht (14) umfasst,
**dadurch gekennzeichnet, dass**
e) die Mittel (32,34,36) zum Transport der Blechrohre (10) im Bereich des Auftragsarms (22) wegklappbar und zum Transport stirnseitig aneinanderliegender Blechrohre (10) in Axialrichtung (L) vorgesehen sind,
f) der Auftragsarm (22) als Arbeitsreservoir für blockförmige Hotmelt-Masse (40) ausgestaltet ist,
g) im Auftragsarm (22) Mittel (44) zum Vorschieben und Andrücken der Hotmelt-Masse (40) in Richtung (V) des Schweissarms (16) mit einem vor- und rückwärts verschiebbaren Einsatz (50) angeordnet sind,
h) eine die Hotmelt-Masse (40) führende Heizung (54) im Auftragsarm (22) sich in Vorschubrichtung (V) der Hotmelt-Masse (40) verengt, und
i) im Auftragsarm (22) ein Zuflussrohr (60) für die Speisung einer benachbart des Schweissarms (16) als Auftragseinrichtung dienende, auswechselbare Applikationsdüse (62) angeordnet ist.

2. Schweissmaschine nach Anspruch 1, **dadurch gekennzeichnet. dass** zum Vorschieben und Anpressen der blockförmigen Hotmelt-Masse (40)
- der Einsatz (50) als elektromotorisch angetriebener Gewindenng mit aussenliegendem Gewinde (52) ausgebildet ist. und die Innenseite des Auftragsrohrs (22) ein entsprechendes Gewinde hat. oder
- der Einsatz (50) auf einer in der Längsachse (L) des Auftragsrohrs (22) liegenden, elektromotorisch angetriebenen Spindel läuft, wobei der/die Hotmelt-Block/Blöcke (40) eine entsprechende Bohrung hat/haben, oder
- der Einsatz (50) als von einem Aggregat betriebener Kolben pneumatisch ausgebildet ist.

3. Schweissmaschine nach Anspruch 2, **dadurch gekennzeichnet. dass** der Einsatz (50) und das Antriebsorgan (44) auswechselbar oder entfernbar in das Auftragsrohr (22) eingesetzt sind.

4. Schweissmaschine nach Anspruch 1 oder 2, **dadurch gekennzeichnet, dass** ein abhebbar befestigter, sich über etwa die obere Hälfte des Umfangs eines Teils des Auftragsrohrs (22) erstreckender Deckel (38) angeordnet ist, welcher innen vollständig, aussen wenigstens im oberen Bereich flächenbündig schliesst.

5. Schweissmaschine nach einem der Ansprüche 1 bis 4, **dadurch gekennzeichnet, dass** um das Zuflussrohr (60) wenigstens eine weitere Heizung (68) angeordnet ist, vorzugsweise auch in Form einer Heizmanschette, eines Heizdrahtes oder Heizbandes.

6. Schweissmaschine nach einem der Ansprüche 1 bis 5, **dadurch gekennzeichnet, dass** im Zuflussrohr (60) zur Applikationsdüse (62) eine Pumpe für die flüssige Hotmeit-Masse (40) und vorzugsweise eine auswechselbare Filterpatrone (66) eingebaut ist.

7. Verfahren zum Betrieb der Schweissmaschine nach einem der Ansprüche 1 bis 6,
**dadurch gekennzeichnet, dass**
die blockförmige Hotmelt-Masse (40), der Vorschubrichtung (B) der Blechrohre (10) entgegenlaufend, in Richtung (V) durch das Auftragsrohr (22) geführt, im Bereich der sich verengenden Heizung (54) geschmolzen, durch das Zuflussrohr (60) in die Applikationsdüse (62) geführt und als Hotmelt-Streifen (14) auf die Innenseite der Längsschweissnaht (12) von Blechrohren (10) aufgetragen oder aufgespritzt wird.

8. Verfahren nach Anspruch 7, **dadurch gekennzeichnet. dass** die Hotmelt-Masse (40) im Bereich der sich verengenden Heizung (54) bei einer Temperatur von 100-300°C. vorzugsweise 200 bis 280°C, geschmolzen, im Zuflussrohr (60) auf dieser Temperatur gehalten, und mit einem Durchsatz von 0.2 bis 1.5 kg/h als 20 bis 150 µm, vorzugsweise 20 bis 50 µm dicker, 3 bis 12 mm breiter Hotmelt-Streifen (14) aufgetragen wird.

9. Verfahren nach Anspruch 7 oder 8. **dadurch gekennzeichnet. dass** die verflüssigte Hotmelt-Masse (40) mit einer in das Zuflussrohr (60) eingebauten Pumpe mit einem Druck von 5 bis 50 Pa, vorzugsweise 10 bis 35 Pa, zur Applikationsdüse (62) geleitet wird.

10. Anwendung des Verfahrens nach einem der Ansprüche 7 bis 9 zum Auftragen eines sterilisationsfesten Hotmelt-Streifens (14) auf die innere Längsschweissnaht (12) eines Weissblechdosenmantels (10).

## Claims

1. Welding machine for production of metal tubes (10) welded in the axial direction, with a device for continuous application of a protective layer (14) to cover the inside of the longitudinal weld seam (12) of the metal tubes (10) which are transported in the axial direction (L), said welding machine comprising
a) an inner welding roller (18) arranged on a welding arm (16),
b) an application arm (22) which runs coaxial and surface-flush with the welding arm (18) and carries the metal tubes (10) and is formed tubular,
c) means (32, 34, 36) for transporting the metal tubes (10), and
d) an application device for the protective layer (14),
**characterized in that**
e) the means (32, 34, 36) for transporting the metal tubes (10) fold away in the area of the application arm (22) and are adapted for the transport in the axial direction of metal tubes (10) lying end-to-end next to each other,
f) the application arm (22) is formed as a working reservoir for block-like hot-melt masses (40),
g) in the application arm (22) are provided means (44) to advance and press the hot-melt mass (40) in the direction (V) of the welding arm (16) with an insert (50) which is movable forward and backward,
h) a heating device (54) guiding the hot-melt mass (40) in the application arm (22) tapers in the direction of advance (V) of the hot-melt mass (40), and
i) in the application arm is arranged a supply tube (60) to supply an interchangeable application nozzle (62) serving as an application device and arranged next to the welding arm (16).

2. Welding machine according to Claim 1, **characterised in that** to advance and press the block-shaped hot-melt mass (40):
- the insert (50) is designed as an electric-motor-driven threaded ring with external thread (52), and the inside of the application pipe (22) has a corresponding thread, or
- the insert (50) runs on an electric-motor-driven spindle lying on the longitudinal axis (L) of the application pipe (22), where the hot-melt block/blocks (40) hasihave a corresponding bore, or
- the insert (50) is designed as a pneumatic piston driven by a device.

3. Welding machine according to Claim 2, **characterised in that** the insert (50) and the drive element (44) are interchangeably or removably inserted in the application pipe (22).

4. Welding machine according to Claim 1 or Claim 2, **characterised in that** a removably fixed lid (38) extending approximately over the upper half of the periphery of a part of the application pipe (22) is provided, which closes internally fully flush and externally flush at least in the upper area.

5. Welding machine according to one of Claims 1 to 4, **characterised in that** around the supply pipe (60) is arranged at least one further heater (68) preferably in the form of a heating sleeve, a heating wire or a heating strip.

6. Welding machine according to one of Claims 1 to 5, **characterised in that** in the supply tube (60) to the application nozzle (62) is fitted a pump for the fluid hot-melt mass (40) and preferably an interchangeable filter cartridge (66).

7. Process for operation of the device according to one of Claims 1 to 6,
**characterised in that**
the block-shaped hot-melt mass (40) which runs opposite the advance direction (B) of the sheet metal tubes (10), is guided in direction (V) by the application tube (22), melted in the area of the narrowing heater (54), fed through the supply tube (60) to the application nozzle (62) and applied or sprayed as a hot-melt strip (14) to the inside of the longitudinal weld seam (12) of the sheet metal tubes (10).

8. Process according to Claim 7, **characterised in that** the hot-melt mass (40) is melted in the area of the narrowing heater (54) at a temperature of 100-300°C, preferably 200 to 280 °C, held at this temperature in the supply pipe (60), and applied at a flow rate of 0.2 to 1.5 kg/h as a 20 to 150 µm, preferably 20 to 50 µm thick, 3 to 12 mm wide hot-melt strip (14).

9. Process according to Claim 7 or Claim 8, **characterised in that** the fluid hot-melt mass (40) is passed at a pressure of 5 to 50 Pa, preferably 10 to 35 Pa, to the application nozzle (62) by a pump incorporated in the supply pipe (60).

10. Application of the process according to one of Claims 7 to 9 for the application of a sterilisation-stable hot-melt strip (14) to the inner longitudinal weld seam (12) of a tin-plate can shell (10).

## Revendications

1. Machine à souder pour la production de tubes en tôle (10) soudés en direction axiale avec un dispositif pour la déposition continue d'une couche de protection (14) pour recouvrir le côté interne du cordon de soudure longitudinal (12) des tubes en tôle (10) transportés dans la direction axiale L, laquelle machine à souder comprend :
a) une roulette de soudure (18) interne disposée sur un bras de soudure (16),
b) un bras de déposition (22), qui est tubulaire, s'étendant coaxialement et de niveau avec la surface du bras de soudure (18), qui porte les tubes en tôle (10),
c) des moyens (32, 34, 36) pour le transport des tubes en tôle (10), et
d) un dispositif de déposition pour la couche de protection (14),
**caractérisée en ce que** :
e) les moyens (32, 34, 36) pour le transport des tubes en tôle (10) sont repliables dans le domaine du bras de déposition (22) et sont prévus pour le transport en direction axiale (L) de tubes en tôle (10) situés côte à côte du côté frontal,
f) le bras de déposition (22) est agencé sous forme de réservoir de travail pour une masse de Hotmelt (40) en forme de blocs,
g) dans le bras de déposition (22), il est prévu un moyen (44) pour faire avancer et presser la masse de Hotmelt (40) dans la direction (V) du bras de soudure (16) avec un insert (50) déplaçable vers l'avant et vers l'arrière,
h) un dispositif de chauffage (54) guidant la masse de Hotmelt (40) dans le bras de déposition (22) va en se rétrécissant dans la direction d'avance (V) de la masse de Hotmelt (40), et
i) dans le bras de déposition (22) est agencé un tube d'alimentation (60) pour l'alimentation d'un gicleur d'application (62) interchangeable disposé au voisinage du bras de soudure (16) et servant de dispositif de déposition.

2. Machine à souder selon revendication 1, **caractérisé en ce que**, pour l'avance et le pressage de la masse de Hotmelt (40),
- l'insert (50) est conçu en temps que bague filetée extérieure (52) et entrainé par moteur électrique et que la surface intérieure du tube de déposition (2) posséde un filetage correspondant, ou
- que l'insert (50) marche sur une vis entrainée par moteur électrique monté dans l'axe longitudinal (L) du tube de déposition (2), cas ou le/les bloc/s de Hotmelt (40) aura/ont un perçage central correspondant, ou
- que l'insert (50) soit conçu en forme de verin pneumatique alimenté par un aggrégat.

3. Machine à souder selon revendication 2, **caractérisé en ce que** l'insert (50) et l'aggrégat d'entrainement (44) soient montés de façon démontable et retirable dans le tube de déposition (22).

4. Machine à souder selon revendications 1 ou 2, **caractérisé en ce q**' un couvercle (38) fixé de façon à pouvoir être ouvert, ferme une ouverture de la dimension de la moitié supérieure de la circonférence du tube de déposition (22) de façon complètement plane avec les surfaces intérieures et extérieures du tube, au moins plane dans sa partie supérieure.

5. Machine à souder selon revendications 1 à 4 **caractérisé en ce que**, au moins un autre chauffage (68) soit disposé autour du tube d'alimentation (60), de préférence sous forme d'une manchette de chauffage, d'un fil chauffant ou d'une bande chauffante.

6. Machine à souder selon revendications 1 à 5 **caractérisé en ce que**, dans le tube d'alimentation (60) au gicleur (62) soit montée une pompe transportant la masse de Hotmelt (40) et de préférence, un filtre à cartouche interchangeable (66).

7. Procédé pour le fonctionnement de dispositif selon revendications 1 à 6,
**caractérisé en ce que**
la masse de Hotmelt en forme de blocs (40) est transportée dans le sens contraire à celui de l'avance (B) des tubes de tôle (10), en direction (V) dans le tube de déposition (22), fondue dans le volume de rétrécissement du chauffage (54), amenée au gicleur d'application (62) par le tube d'alimentation (60) et déposée ou projetée sous forme d'une bande de Hotmelt (14) sur la surface intérieure d'un cordon de soudure longitudinal (12) de tubes de tôle (10).

8. Procédé selon revendication 7 **caractérisé en ce que** la masse de Hotmelt (40) est fondue dans le volume de rétrécissement du chauffage (54) à une température de 100-300°C, de préférence de 200 à 280 °C. maintenue à cette température dans le tube d'alimentation (60) et déposée avec un débit de 0.2 à 1.5 kg/h en une bande de Hotmelt (14) d'une largeur de 3 à 12 mm et d'une épaisseur de 20 à 150 µm, de préférence de 20 à 50 µm.

9. Procédé selon revendication 7 ou 8 **caractérisé en ce que** la masse de Hotmelt fluidifiée (40) est transportée au gicleur d'application (62) par une pompe montée dans le tube d'alimentation (60) à une pression de 5 à 50 Pa, de préférence de 10 à 35 Pa.

10. Procédé selon revendication 7 à 9 **caractérisé en ce qu'** une bande de Hotmelt (14), résistante à la stérilisation, est déposée sur la surface intérieure d'un cordon de soudure d'un manteau de boîte de conserve en tôle étamée.
